# EUROPEAN PATENT APPLICATION

(11) **EP 4 650 844 A1**
(43) Date of publication of application: **19.11.2025**
(21) Application number: 25174323.3
(22) Date of filing: 05.05.2025
(51) Int. Cl.: G02B 6/44

(54) **ARMORED OPTICAL FIBER CABLE WITH EASY ACCESS**

(30) Priority: 14.05.2024 IN 202411037941
(71) Applicant: Sterlite Technologies Limited, Gurugram, Haryana 122102 (IN)
(72) Inventor: Sahoo, Kishore, 122102 Gurugram, Haryana (IN); Rajsekar, Vishnu, 122102 Gurugram, Haryana (IN); Singh, Harikishan, 122102 Gurugram, Haryana (IN)
(74) Representative: Petraz, Gilberto Luigi

(57) **Abstract**

The present disclosure provides an optical fiber cable (102) including a plurality of optical transmission elements (104), and a metallic layer (108) surrounding the plurality of optical transmission elements, a sheath (114) directly surrounding the metallic layer, wherein the sheath is at least in partial contact with the metallic layer. Further, the arrangement of the optical fiber cable reduces the contact area between the sheath and the metallic layer, so that the peeling strength required to separate the sheath from the metallic layer is less than 11 Kg/cm. This results in easy access to the plurality of optical transmission elements in the optical fiber cable and makes it easy to separate the sheath from the metallic layer.

## Description

### TECHNICAL FIELD

Embodiments of the present disclosure relate to the field of wireless communication networks, and in particular, relates to an armored optical fiber cable with easy access.

The present application claims the benefit of Indian Application No. 202411037941 titled "ARMORED OPTICAL FIBER CABLE WITH EASY ACCESS" filed by the applicant on May 14, 2024**,** which is incorporated herein by reference in its entirety.

### BACKGROUND ART

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information. In a typical cable arrangement, optical fibers are placed in a tubular assembly. A tube may be disposed inside an outer jacket or may form the outer jacket. In either case, the tube typically provides at least some level of protection for the fibers contained therein.

Another conventional technology for protecting optical fibers entails placing a water absorbent chemical, such as water-swellable material, within the cable. The chemical absorbs water that may inadvertently enter the cable, and swells to prevent the water from traveling down long lengths of cable and degrading the delicate optical fibers. Optical fibers are ordinarily susceptible to damage from water and physical stress. Without an adequate barrier, moisture may migrate into a fiber optic cable and weaken or destroy the cable's optical fibers. Without sufficient physical protection, stress or shock associated with handling the fiber optic cable may transfer to the optical fibers, causing breakage or stress-induced signal attenuation. One conventional technique for protecting the optical fibers from damage is to fill the cable with a fluid, a gel, a grease, or a thixotropic material that strives to block moisture incursion and to absorb mechanical shock.

An optical fiber cable has secured an important position in building the optical network of modern communication systems across the globe. The optical fiber cable is part of millions of miles of an optical network. From mountain regions to shoreline, from remotest villages to urban environments, engineers have installed the optical fiber cable almost in every region for better internet connectivity and high bandwidth. In general, the optical fiber cable may incorporate a metallic layer under a sheath (or outer jacket), wherein a separation layer may be formed between the metallic layer and the sheath for ease of separation and fiber access.

Conventionally, the separation layer in the form of oil or tape or coating (e.g., co-polymer coating or the like) may be placed over or within the metallic layer for easy separation between the sheath and the metallic layer during end preparation for termination of the optical fiber cable or mid-spanning of the optical fiber cable. In an example, a thin oil layer (via spray/dip) may be applied to get easy peeling /separation between the sheath and the metallic layer. However, this incurs extra process step in the manufacturing of optical fiber cable, extra cost of manufactured product and/or extra efforts for removing the separation layer.

Other conventional technologies for controlling adhesion between the jacket and the armor are generally limited. One approach involves coating the armor with a polymer that adheres to the jacket but has a low cohesive strength to facilitate peeling the jacket from the armor. Another approach involves applying a hot-melt substance, such as atactic polyolefin polymer, between the jacket and the armor. Such conventional approaches can pose challenges in terms of supply availability, manufacturing complications, and consistent performance.

US Patent Application "US8639075B1" describes a communication cable including optical fibers protected by an armor. An outer jacket covers the armor to provide environmental protection. A net located between the outer jacket and the armor can comprise openings, with the outer jacket extending into the openings, towards the armor. The net can be wrapped, formed, or woven around the armor, for example. The net can aid a craftsperson in separating the outer jacket from the corrugated metal layer, for example in connection with servicing the cable. The openings can control coupling between the outer jacket and the armor, for example providing a desired level of friction, bonding, adhesion, adherence, fusion, and/or contact between the outer jacket and the armor.

Another US Patent Application "US11619796B2" describes a ribbed and grooved fiber cable including a core with a plurality of optical fibers, a sheath enveloping the core and one or more strength members embedded in the sheath. The strength members are coated with a water blocking coating material having at least one of an ultraviolet (UV) curable water swellable resin composition and a layer of ethylene acrylic acid (EAA). The sheath of the cable has at least one of a plurality of ribs and grooves on an external surface of the sheath, and a plurality of ribs and grooves on an internal surface of the sheath. The plurality of ribs have variable height.

Yet another US Patent Application "US7123801B2" describes optical fiber cables with a central strength member encircled by a jacket having slots which are disposed within the jacket around the strength member and which receive one or more optical fibers.

The optical fibers are free to move in the ducts, and preferably, the optical fibers are tight buffered. Portions of the jacket intermediate the ducts connect to the strength member which resists longitudinal movement of the jacket relative to the core. While the prior arts cover various solutions to prevent sticking of the sheath and other elements of the cable to provide smooth end preparation for termination; however, there still remains a scope for improvement.

Accordingly, to overcome the disadvantages of the prior arts, there is a need for a technical solution that overcomes the above-stated limitations in the prior arts. The present disclosure provides an armored optical fiber cable for communications and other applications.

### SUMMARY OF THE DISCLOSURE

Embodiments of the present disclosure relates to an optical fiber cable including a plurality of optical transmission elements and a metallic layer surrounding the plurality of optical transmission elements. In particular, the plurality of optical transmission elements is one of: loose fibers, ribbons, Intermittently Bonded Ribbons (IBRs), loose tubes, micromodules, and tight buffer fibers. And, the metallic layer is one of: a corrugated Electro Chrome Coated Steel (ECCS) tape.

According to the first aspect of the present disclosure, the metallic layer is devoid of adhesion controlling film or adhesion controlling material.

According to the second aspect of the present disclosure, the metallic layer is devoid of adhesion controlling film or adhesion controlling material. The metallic layer has corrugations in the form of alternate ribs and grooves. The corrugations on the metallic layer have a pitch of 2.5±0.1 millimeter (mm). Further, the metallic layer is wrapped around the plurality of optical transmission elements such that ribs and grooves of the metallic layer are positioned substantially orthogonal to a longitudinal axis of the optical fiber cable.

According to the third aspect of the present disclosure, the optical fiber cable includes a sheath directly surrounding the metallic layer. In particular, the sheath is at least in partial contact with the metallic layer. An inner surface of the sheath includes alternate ribs and grooves extending along the length of the cable, which are formed during a sheath extrusion process. Further, ratio of a number of grooves on the inner surface of the sheath and an inner diameter of the sheath is between 1.5 - 4.7.

According to the fourth aspect of the present disclosure, the contact area between the sheath and the metallic layer is less than 60 percent of the total surface area of the inner surface of the sheath.

According to the fifth aspect of the present disclosure, peeling strength required to separate the sheath from the metallic layer is less than 11 kilograms per centi-meter (Kg/cm).

According to the sixth aspect of the present disclosure, the optical fiber cable is devoid of: additionally, applied component or additionally applied material in-between the metallic layer and the sheath.

In accordance with an embodiment of the present disclosure, the armored optical fiber cable includes a sheath with a first set of ribs and a first set of grooves on an inner surface of the sheath.

In accordance with an embodiment of the present disclosure, the armored optical fiber cable allows an easy separation/peel off of the sheath from a metallic layer (e.g., steel tape) in the optical fiber cable to access a plurality of optical transmission elements, in a cost-effective manner, without requiring any addition material or tool, and by reducing (or controlling) a contact area between the sheath and the metallic layer.

The foregoing objectives of the present disclosure are attained by providing an armored optical fiber cable.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
FIG. 1 is a pictorial snapshot illustrating a cross-sectional view of an optical fiber cable in accordance with an embodiment of the present disclosure.
FIG. 2 is a pictorial snapshot illustrating a side view of the optical fiber cable in accordance with an embodiment of the present disclosure.
FIG. 3 is a pictorial snapshot illustrating a cross-sectional view of a sheath of the optical fiber cable in accordance with an embodiment of the present disclosure.
FIG. 4 is a pictorial snapshot illustrating a cross-sectional view of the optical fiber cable depicting an overlap portion of a metallic layer in accordance with an embodiment of the present disclosure.
FIG. 5 is a pictorial snapshot illustrating a cross-sectional view of the optical fiber cable without a water blocking tape in accordance with an embodiment of the present disclosure.

### REFERENCE NUMBERS

- 100: Cross-Sectional view of optical fiber cable
- 102: Optical fiber cable
- 104: Optical transmission elements
- 106: Water blocking tape (WBT)
- 108: Metallic layer
- 110: First set of ribs
- 112: First set of grooves
- 114: Sheath
- 200: Side view of optical fiber cable
- 202: Second set of ribs
- 204: Second set of grooves
- 300: Cross-Sectional view of the sheath
- 400: Cross-Sectional view of optical fiber cable
- 402: Overlap portion/region
- 500: Cross-Sectional view of optical fiber cable

The optical fiber is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

Term optical fiber refers to a medium associated with transmission of information over long distances in the form of light pulses. The optical fiber uses light to transmit voice and data communications over long distances when encapsulated in the sheath (114). The optical fiber may be of ITU.T G.657A2 category. Alternatively, the optical fiber may be of ITU.T G.657A1 or G.657B3 or G.652D or another suitable category. The ITU.T, stands for International Telecommunication Union-Telecommunication Standardization Sector, is one of the three sectors of the ITU.

Term "optical fiber cable" as used herein refers to a cable that encloses a plurality of optical fibers.

Term "single mode fiber" as used herein refers to a single glass fiber strand that may allow transmission of the light. The single mode fiber may feature only transmission mode.

Term "multi-mode fiber" as used herein refers to an optical fiber that supports propagation of multiple modes.

Term "single core fiber" as used herein refers to an optical fiber that has a single core for transmission of data/light.

Term "multi-core fiber" as used herein refers to an optical fiber that has multiple cores for transmission of data/light.

Term " intermittently bonded ribbon (IBR)" as used herein refers to an optical fiber ribbon having a plurality of optical fibers such that the plurality of optical fibers is intermittently bonded to each other by a plurality of bonded portions that are placed along the length of the plurality of optical fibers. The plurality of bonded portions is separated by a plurality of unbonded portions.

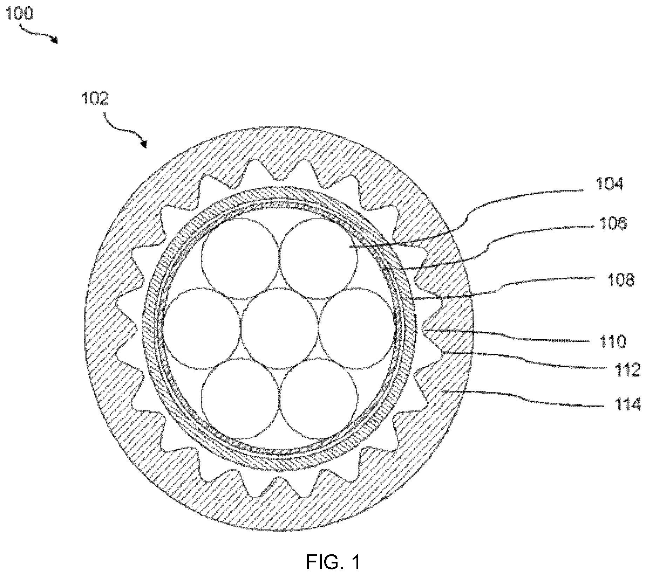

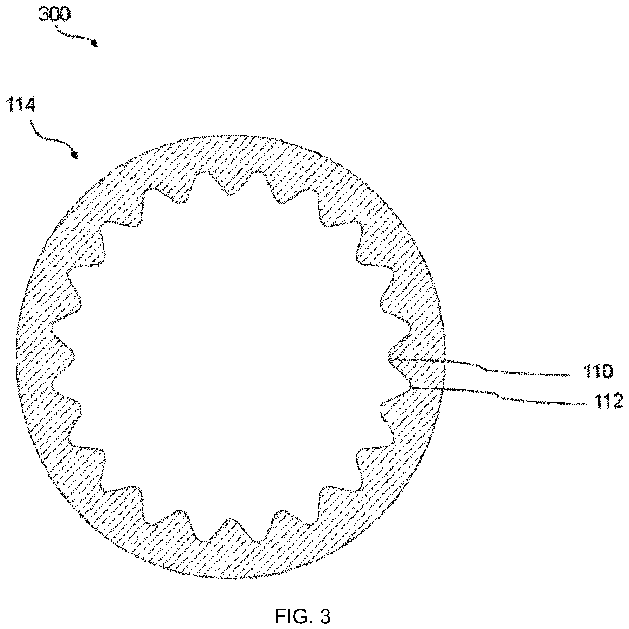

FIG. 1, FIG. 2, FIG.4 and FIG. 5 are pictorial snapshots illustrating a cross-sectional view (100) side view (200), cross-sectional view (400), cross-sectional view (500) of the optical fiber cable (102) in accordance with various embodiments of the present invention. FIG. 3 is a pictorial snapshot illustrating a cross-sectional view (300) of a sheath (114) of the optical fiber cable (102). The cross-sectional view (400) of the optical fiber cable (102) includes an overlap portion (402) of a metallic layer (108). The cross-sectional view (500) of the optical fiber cable (102) without a water blocking tape (WBT) (106).

Referring to FIG. 1 to FIG. 4, the optical fiber cable (102) includes one or more optical transmission elements (104), the water blocking tape (106), the metallic layer (108) and the sheath (114).

In accordance with an embodiment of the present disclosure, the one or more optical transmission elements (104) may be present in form of, but not limited to, a plurality of optical fibers, a group of loose optical fibers, a group of optical fiber ribbons, a stack of optical fiber ribbons, a group of bendable ribbons, a group of corrugated ribbons, a group of intermittently bonded optical fiber ribbons, a plurality of buffer tubes, a plurality of tight buffered optical fibers, loose tubes, micromodules.

In accordance with an embodiment of the present disclosure, an optical fiber refers to a medium associated with transmission of information over long distances in the form of light pulses. The optical fiber uses light to transmit voice and data communications over long distances when encapsulated in the sheath (114). The optical fiber may be of ITU.T G.657A2 category. Alternatively, the optical fiber may be of ITU.T G.657A1 or G.657B3 or G.652D or another suitable category.

In accordance with an embodiment of the present disclosure, the optical fiber may have a diameter of 242+/-7 microns. The diameter of the optical fiber may vary based on the usage, an application, and a type of service e.g. 180 microns, 200 microns, 220 microns.

In accordance with an embodiment of the present disclosure, the optical fiber may have a maximum attenuation less than 0.4 dB at 1310 nm (nano-meter), or 0.3 dB at 1550 nm.

In accordance with an embodiment of the present disclosure, the optical fiber may be a bend insensitive fiber that has less degradation in optical properties during bending of the optical fiber cable. The optical fibers may be coloured fiber.

In accordance with an embodiment of the present disclosure, the optical fiber may be a single mode optical fiber, a multicore optical fiber, a multimode optical fiber or the like. The single mode optical fiber carries only a single mode of light and the multimode optical fiber carries multiple modes of light to propagate. The multicore optical fibers comprise multiple cores as opposed to the single mode optical fiber and the multimode optical fibers that comprise only a single core.

In accordance with an embodiment of the present disclosure, the plurality of buffer tubes is an encasement tube used to encapsulate a number of optical fibers or an optical fiber ribbon stack. In particular, a buffer tube from the plurality of buffer tubes is used in the optical fiber cable to provide mechanical isolation and protection from physical damages. The plurality of buffer tubes includes a plurality of optical transmission elements. Further, an optical fiber ribbon bundle is a group of a plurality of optical fiber ribbons arranged together.

The optical fiber ribbon includes a number of optical fibers arranged together using a matrix material. Multiple individual optical fiber ribbons are stacked or grouped into a bundle to form the optical fiber ribbon bundle.

In accordance with an embodiment of the present disclosure, an intermittently bonded optical fiber ribbon from the group of intermittently bonded optical fiber ribbons is formed by intermittently bonding the plurality of optical fibers with a specific material that imparts a bending and rolling capability along a width of the intermittently bonded optical fiber ribbon. The micromodules typically include the optical fibers arranged in the easy peelable encasings for transmitting optical data and are housed in a cable jacket.

In accordance with an embodiment of the present disclosure, the number of the one or more optical transmission elements (104) may be 4 to 48 enclosing a plurality of optical fibers. Alternatively, the number of the one or more optical transmission elements (104) may vary based on the usage, the application and location and type of the service.

In accordance with an embodiment of the present disclosure, the water blocking tape (106), also called as a water swellable tape, extends lengthwise in the optical fiber cable (102) and is wrapped around the one or more optical transmission elements (104). The water blocking tape (106) runs generally parallel to the one or more optical transmission elements (104) and is wrapped lengthwise over the one or more optical transmission elements (104). As a result of wrapping, one surface of the water blocking tape (106) is adjacent and essentially parallel to an interior surface of the optical fiber cable (102).

In accordance with an embodiment of the present disclosure, the water blocking tape (106) comprises a single/double layers of non-woven polyester with particles of superabsorbent polymer powder (such as a sodium polyacrylate powder or a potassium polyacrylate/acrylamide copolymer powder, or the like) adhering loosely to one surface of the non-woven polyester layers. The thickness and width of the water blocking tape (106) can be controlled to optimize water blocking in the optical fiber cable (102). The water blocking tape

(106) may be non-compressible, without necessarily needing any foam material, foam layers, adhesives, binders, cured agents, or wetted material.

In accordance with an embodiment of the present disclosure, the water blocking tape (106) runs along the optical fiber cable (102), with the powder disposed on the side of the water blocking tape (106) that faces the one or more optical transmission elements (104) or in between two non-woven polyester layers of water blocking tape (106). Alternatively, the water blocking tape (106) may be replaced by superabsorbent powder coated aramid yarns, glass roving yarns, and other suitable water blocking material.

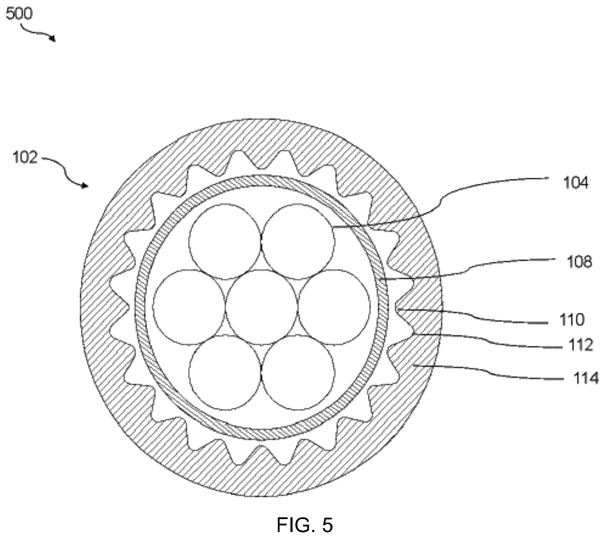

In accordance with an embodiment of the present disclosure, the water blocking tape (106) is surrounded by the metallic layer (108). Alternatively, the optical fiber cable (102) may be devoid of the water blocking tape (106), where the one or more optical transmission elements (104) is directly surrounded by the metallic layer (108) (as shown in FIG. 5).

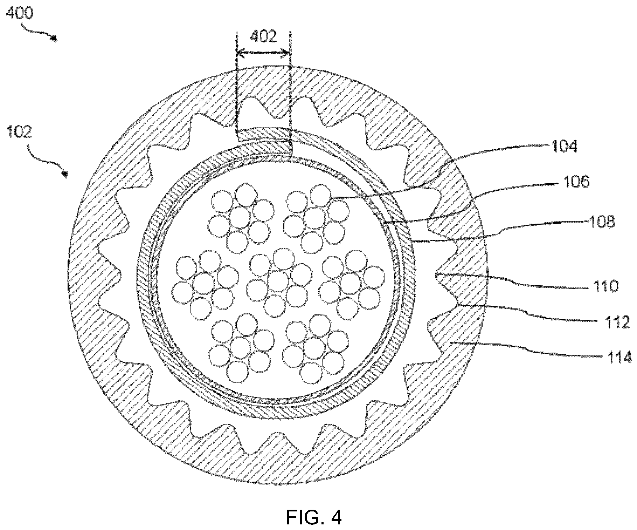

In accordance with an embodiment of the present disclosure, the metallic layer (108) is devoid of adhesion controlling film or adhesion controlling material, which reduces the manufacturing costs and process complexity. In particular, the metallic layer (108) is wrapped with an overlap of less than 30 percent of the width of the metallic layer (108). The same is indicated as an overlap portion/region (402) in FIG. 4. Moreover, the overlap portion (402) is formed by overlapping one end of the metallic layer (108) with another end of the metallic layer (108). Further, the overlap portion (402) avoids a sheath material passing inside a cable core to further prevent the damage of the one or more optical transmission elements (104).

In accordance with an embodiment of the present disclosure, the metallic layer (108) offers mechanical protection, such as crush and rodent resistance to the optical fiber cable (102). Moreover, the metallic layer (108) may also provide a capability to conduct a signal applied for identification and location when the optical fiber cable (102) is buried or deployed in an underground application. Further, the metallic layer (108) may comprise a corrugated metal, flexible interlocking structure or other appropriate system for providing mechanical protection for the optical fiber cable (102).

In accordance with an embodiment of the present disclosure, the metallic layer (108) is one of: a corrugated Electro Chrome Coated Steel (ECCS) tape and an Aluminum tape. The metallic layer (108) has corrugations in form of alternate ribs (second set of ribs) (202) and grooves (second set of grooves)

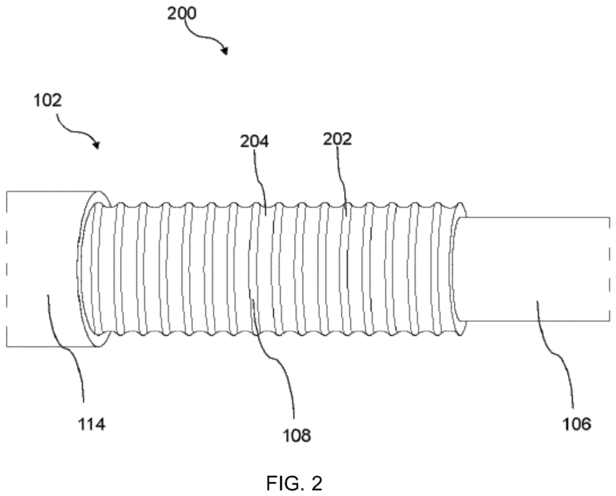

(204), which are positioned substantially orthogonal to a longitudinal axis of the optical fiber cable (102), as shown in FIG. 2, and is wrapped around the one or more optical transmission elements (104).

In accordance with an embodiment of the present disclosure, shape of the second set of ribs (202) and the second set of grooves (204) can be, for example, but not limited to, concave, convex, V-shape, square, rectangle, or the like.

In accordance with an embodiment of the present disclosure, corrugations on the metallic layer (108) help in achieving low contact area between the the metallic layer (108) and the sheath (114). The corrugations on the metallic layer (108) has a pitch of 2.5±0.1 mm. This is optimized to provide flexibility in the metallic layer (108) and ease of manufacturing of the optical fiber cable (102).

In accordance with an embodiment of the present disclosure, the metallic layer (108) is directly surrounded by the sheath (114). The sheath (114) is at least in partial contact with the metallic layer (108), and the second set of ribs (202) and the second set of grooves (204) of the metallic layer (108) are perpendicular to a first set of ribs (110) and a first set of grooves (112) on the inner surface of the sheath (114). The first set of ribs (110) and the first set of grooves (112) of the sheath (114) are positioned substantially parallel to the longitudinal axis of the optical fiber cable (102).

The sheath (114) may be referred to as a jacket. Usually, sheathing (extrusion) for the sheath (114) is done at a high temperature (more than 100°C). The sheathing is a process of squeezing a sheathing material through a funnel of a die as the core runs through the center.

In accordance with an embodiment of the present disclosure, the sheathing material for the sheath (114) may include, but not limited to, polyvinylchloride, polyethylene (such as High Density Poly Ethylene (HDPE), Medium Density Poly Ethylene, Low Density Poly Ethylene and Ultra-violet (UV) stabilised black polyethylene), polyurethane, thermoplastic rubber/elastomer, thermoplastic chlorinated polyethylene, thermoset polyolefins or combination thereof.

In accordance with an embodiment of the present disclosure, the inner surface of the sheath (114) has the first set of ribs (110) and the first set of grooves (112) formed during the sheath extrusion process, which reduces the material consumption, hence reduces manufacturing costs. A shape of the first set of ribs (110) and the first set of grooves (112) can be, for example, but not limited to, concave, convex, V-shape, square, rectangle, or the like. The first set of ribs (110) and the first set of grooves (112) on the inner surface of the sheath (114) help in reducing the contact area between the sheath (114) and the metallic layer (108). The contact area between the sheath (114) and the metallic layer (108) is less than 60 percent of a total surface area of the inner surface of the sheath (114), and a peeling strength required to separate the sheath (114) from the metallic layer (108) is less than 11 Kg/cm. These derived values result in easy access to the one or more optical transmission elements (104) within the optical fiber cable (102) and makes it easy to separate the sheath (114) from the metallic layer (108).

In accordance with an embodiment of the present disclosure, the peeling strength means the strength/force required to separate the metallic layer

(108) from the inner surface of the sheath (114) of a stripped optical fiber cable. If the contact area between the sheath (114) and the metallic layer (108) exceeds 60 percent, then separating the sheath (114) and the metallic layer (108) may be challenging, requiring the peeling strength greater than 11 kg/cm.

In accordance with an embodiment of the present disclosure, a ratio of a number of the first set of grooves (112) on the inner surface of the sheath (114) and an inner diameter of the sheath (114) is between 1.5 - 4.7. This results in producing an optimized contact area between the sheath (114) and the metallic layer (108). The optimized contact area requires less adhesion force to access the one or more optical transmission elements (104) in the optical fiber cable (102). If the aforesaid ratio is below 1.5, then the contact surface area between the sheath (114) and the metallic layer (108) will increase and result in more adhesion will be required between the sheath (114) and the metallic layer (108). If the aforesaid ratio is above 4.7, then it will be challenging to manufacture the optical fiber cable (102) and water leak via the sheath (114) may occur.

In accordance with an embodiment of the present disclosure, the presence of the ribs (110) and grooves (112) on the inner surface of the sheath (114) and ribs (202) and grooves (204) on the metallic layer in an orthogonal direction results in reduced adhesion between the sheath (114) and the metallic layer (108), without including an additional adhesion resistant layer/element in between the sheath (114) and the metallic layer (108). Thus, results in allowing easy separation/ peeling of the sheath (114) at end preparation for termination and mid-spanning.

Advantageously, the sheath (114) and the metallic layer (108) are directly in contact with each other, having no additional layer in between and still able to achieve lowed adhesion force between them. In particular, the optical fiber cable (102) is devoid of: additionally, applied component or additionally applied material or additional adhesion resistant layer in-between the metallic layer (108) and the sheath (114), which reduces the manufacturing costs and process complexity.

Further, the arrangement of the armored optical fiber cable allows an easy separation/peel off of a sheath from a metallic layer (e.g., steel tape) in a cost-effective manner as it does not require any additional material or tool for separation. Additionally, the construction and arrangement of the optical fiber cable reduces the material consumption due to grooving in an inner surface of the sheath. Also, the arrangement/structure of the optical fiber cable reduces contact area between the sheath and the metallic layer.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (102), **characterized in that**:
a plurality of optical transmission elements (104);
a metallic layer (108) surrounding the plurality of optical transmission elements (104); and
a sheath (114) directly surrounding the metallic layer (108), wherein the sheath (114) is at least in partial contact with the metallic layer (108), and
wherein a peeling strength required to separate the sheath (114) from the metallic layer (108) is less than 11 kilograms per centi-meter (Kg/cm).

2. The optical fiber cable (102) as claimed in claim 1, wherein the plurality of optical transmission elements (104) is one of: loose fibers, ribbons, Intermittently Bonded Ribbons (IBRs), loose tubes, micromodules, and tight buffered fibers.

3. The optical fiber cable (102) as claimed in claim 1, wherein the optical fiber cable (102) is devoid of: additionally applied component or additionally applied material in-between the metallic layer (108) and the sheath (114).

4. The optical fiber cable (102) as claimed in claim 1, wherein the metallic layer (108) is an Electro Chrome Coated Steel (ECCS) tape, wherein the metallic layer (108) is devoid of adhesion controlling film or adhesion controlling material.

5. The optical fiber cable (102) as claimed in claim 1, wherein an inner surface of the sheath (114) comprises alternate ribs (110) and grooves (112), which are formed during a sheath extrusion process.

6. The optical fiber cable (102) as claimed in claim 5, wherein a ratio of a number of grooves (112) on the inner surface of the sheath (114) and an inner diameter of the sheath (114) is between 1.5 - 4.7.

7. The optical fiber cable (102) as claimed in claim 1, wherein a contact area between the sheath (114) and the metallic layer (108) is less than 60 percent of a total surface area of an inner surface of the sheath (114).

8. The optical fiber cable (102) as claimed in claim 1, wherein the metallic layer (108) has corrugations in form of alternate ribs (202) and grooves (204).

9. The optical fiber cable (102) as claimed in claim 1, wherein the metallic layer (108) is wrapped around the plurality of optical transmission elements (104) such that a second set of ribs (202) and a second set of grooves (204) of the metallic layer (108) are positioned substantially orthogonal to a longitudinal axis of the optical fiber cable (102).

10. The optical fiber cable (102) as claimed in claim 1, wherein corrugations on the metallic layer (108) has a pitch of 2.5±0.1 milli meter (mm).

11. An optical fiber cable (102), **characterized in that**:
a plurality of optical transmission elements (104);
a metallic layer (108); and
a sheath (114) in partial contact with the metallic layer (108), and wherein a peeling strength required to separate the sheath (114) from the metallic layer (108) is less than 11 kilograms per centi-meter (Kg/cm).

12. The optical fiber cable (102) as claimed in claim 11, wherein the plurality of optical transmission elements (104) is one of: loose fibers, ribbons, Intermittently Bonded Ribbons (IBRs), loose tubes, micromodules, and tight buffered fibers.

13. The optical fiber cable (102) as claimed in claim 11, wherein the optical fiber cable (102) is devoid of: additionally applied component or additionally applied material in-between the metallic layer (108) and the sheath (114).

14. The optical fiber cable (102) as claimed in claim 11, wherein the metallic layer (108) is an Electro Chrome Coated Steel (ECCS) tape, wherein the metallic layer (108) is devoid of adhesion controlling film or adhesion controlling material.

15. The optical fiber cable (102) as claimed in claim 11, wherein an inner surface of the sheath (114) comprises alternate ribs (110) and grooves (112), which are formed during a sheath extrusion process.
